# EUROPÄISCHE PATENTSCHRIFT

(11) **EP 1 590 224 B1**
(45) Veröffentlichungstag und Bekanntmachung des Hinweises auf die Patenterteilung: **21.06.2006**
(21) Anmeldenummer: 04700971.7
(22) Anmeldetag: 09.01.2004
(51) Int. Cl.: B62B 3/14

(54) **VON HAND BEWEGBARER TRANSPORTWAGEN**
HAND-MOVEABLE TRANSPORT TROLLEY
CHARIOT DE TRANSPORT POUSSE MANUELLEMENT

(30) Priorität: 06.02.2003 DE 10304962
(43) Veröffentlichungstag der Anmeldung: 02.11.2005
(73) Patentinhaber: Wanzl Metallwarenfabrik GmbH, 89336 Leipheim (DE)
(72) Erfinder: SCHMID, Johann, 87757 Kircheim / Ortsteil Derndorf (DE)
(86) Internationale Anmeldenummer: PCT/DE2004/000016
(87) Internationale Veröffentlichungsnummer: WO 2004/069626

(56) Entgegenhaltungen:
- DE-A- 3 442 124
- DE-A- 3 615 290
- GB-A- 1 156 349

## Beschreibung

Die Erfindung betrifft einen von Hand bewegbaren, mit gleichen Wagen stapelbaren Transportwagen, mit einem Fahrgestell, mit einer Ladeplattform, mit zwei an der Rückseite des Fahrgestelles befindlichen, nach oben gerichteten Holmen, die eine Schiebeeinrichtung tragen, wobei eine durch die Schiebeeinrichtung beeinflussbare, bei Nichtgebrauch des Transportwagens wirksame Bremsvorrichtung vorgesehen ist, die zwei in den Holmen befindliche Bremsstangen aufweist, an deren unterem Ende jeweils ein auf ein Hinterrad einwirkender Bremsschuh angeordnet ist und wobei unterhalb des Fahrgestelles und nahe eines jeden in einer Radgabel geführten Hinterrades je eine Bremslöseeinrichtung vorgesehen und am Fahrgestell jeweils ein mit einer Wirkfläche ausgestattetes Auslöseteil angeordnet sind und die Auslöseteile beim Stapeln zweier Transportwagen mit Hilfe ihrer Wirkfläche zum Auslenken der beiden Bremslöseeinrichtungen des vorausbefindlichen Transportwagens bestimmt sind.

Die DE 34 42 124 A1 beschreibt einen derartigen Transportwagen. Die Bremslöseeinrichtungen dieses Wagens sind jeweils durch einen auf einer horizontalen Achse schwenkbar gelagerten Hebel gebildet, der an einem Ende eine Gleitrolle trägt und mit seinem anderen Ende, einen Holm einseitig durchdringend, mit einer Bremsstange verbunden ist. Als Auslöseteile sind zwei Längsrahmen des Fahrgestelles vorgesehen, deren Unterseite die Funktion eines Wirkteiles übernimmt. Beim platzsparenden Stapeln zweier Transportwagen drücken die beiden Längsrahmen des einzuschiebenden Transportwagens die Gleitrollen des vorausbefindlichen Transportwagens ein Stück weit nach unten mit der Wirkung, dass die Bremsvorrichtung dieses Transportwagens gelöst ist. Diese an sich zweckmäßige Ausführung weist dennoch Nachteile auf. So muss das Fahrgestell dieses Transportwagens relativ hoch angeordnet werden, siehe auch Fig. 2 der DE 34 42 124 A1, um die zweiarmigen Hebel der Bremslöseeinrichtung unterzubringen. Es sind zwei Achsen zum schwenkbaren Lagern dieser Hebel erforderlich und es ist an jedem Holm ein Durchbruch notwendig, damit jeder Hebel mit einer der beiden Bremsstangen verbunden werden kann. Alle diese technischen Merkmale lassen einen Transportwagen entstehen, dessen Herstellung nicht unbedingt als kostengünstig betrachtet werden kann.

Es ist Aufgabe der Erfindung, einen Transportwagen der hier vorliegenden Art so zu verbessern, dass dessen Bremslöseeinrichtung sowie deren Anbindung an die Bremsvorrichtung auf einfache und kostengünstige Weise herstell- und durchführbar ist und dass die eben beschriebene Anordnung ein tiefliegendes Fahrgestell und damit eine tief gelegene Ladeplattform zulässt.

Die Lösung der Aufgabe besteht darin, dass jede Bremslöseeinrichtung von außen her durch eine Radgabel führend mit einer Bremsstange oder mit einem Bremsschuh verbunden ist und dass sich die Wirkfläche eines jeden Auslöseteiles unterhalb der Unterseite des Fahrgestelles befindet.

Die vorgeschlagene Lösung lässt in vorteilhafter Weise zwei Bremslöseeinrichtungen entstehen, die als einfache Verlängerung der Bremsstangen bzw. der Bremsschuhe gestaltet sind. Nutzbar ist hierbei der zwischen jeder Radgabel und jedem Hinterrad befindliche Zwischenraum, der ohnehin immer vorhanden ist. Ein Durchbruch an jedem Holm, wie bisher üblich, ist deshalb nicht mehr erforderlich. In zweckmäßiger Weise sind nicht nur die Bremslöseeinrichtungen, sondern auch die beiden Auslöseteile unterhalb des Fahrgestelles angeordnet, und zwar in raumsparender Weise so, dass das Fahrgestell und die Ladeplattform tiefliegend angeordnet ist. Beim Be- und Entladen der Ladeplattform muss deshalb das Ladegut nicht hoch angehoben werden.

Die Erfindung wird anhand von Ausführungsbeispielen näher erläutert. Es zeigt
- Fig. 1: einen Transportwagen in Seitenansicht;
- Fig. 2: einen Abschnitt einer Bremsstange mit daran angeordnetem Bremsschuh mit Bremslöseeinrichtung;
- Fig. 3: ein Auslöseteil, das im Begriff ist, eine Bremslöseeinrichtung anzuheben sowie
- Fig. 4 und Fig. 5: zwei unterschiedlich gestaltete Radgabeln.

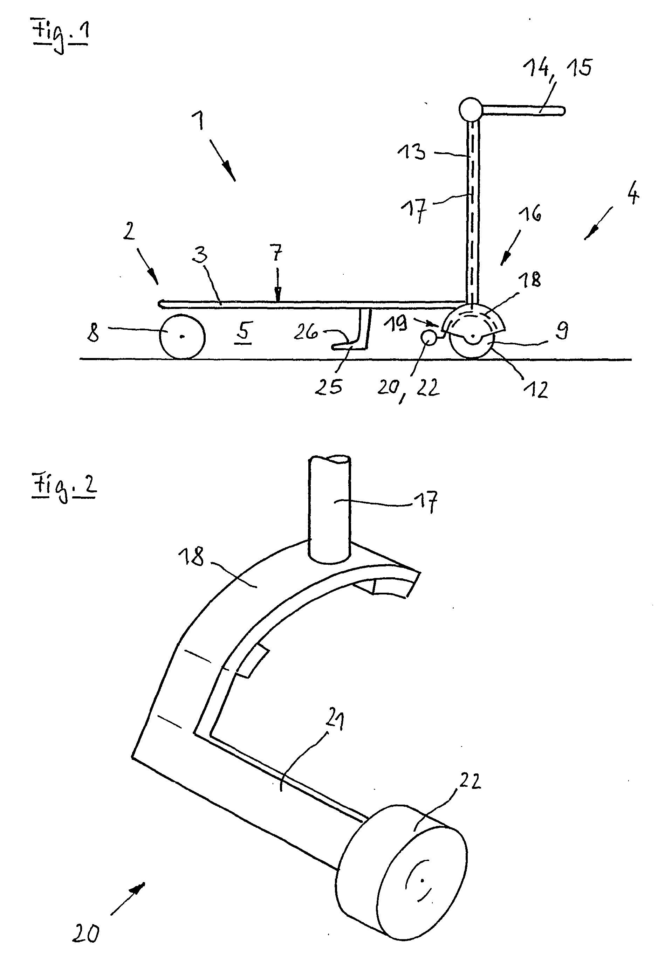

Schematisch und in Seitenansicht dargestellt zeigt Fig. 1 einen von Hand bewegbaren, mit gleichen Wagen stapelbaren Transportwagen 1. Dieser weist ein mit einer Ladeplattform 7 ausgestattetes oder eine Ladeplattform 7 bildendes Fahrgestell 3 auf. An der Rückseite 4 des Fahrgestelles 3 befinden sich zwei nach oben gerichtete oder nach oben führende Holme 13, die eine Schiebeeinrichtung 14 tragen. Die Schiebeeinrichtung 14 ist in bekannter Weise so gestaltet, dass sich mit ihr eine Bremsvorrichtung 16 beeinflussen lässt, die auf die beiden Hinterräder 9 des Transportwagens 1 einwirkt. Der Transportwagen 1 ist ferner mit einem oder mit zwei Vorderrädern 8 ausgestattet. Die Bremsvorrichtung 16 weist zwei Bremsstangen 17 auf, wobei in jedem Holm 13 eine der von oben nach unten führenden Bremsstangen 17 angeordnet ist. Jede Bremsstange 17 trägt an ihrem unteren Ende einen Bremsschuh 18, der im Falle eines Bremsvorganges zum Aufliegen an der Lauffläche 12 eines Hinterrades 9 bestimmt ist. Unterhalb des Fahrgestelles 3 und nahe an jedem Hinterrad 9 ist jeweils eine Bremslöseeinrichtung 20 angeordnet und wie in Fig. 2 gezeigt, mit jeweils einem Bremsschuh 18 ortsfest verbunden. Im Beispiel weist jede Bremslöseeeinrichtung 20 eine Gleitrolle 22 auf. Zu beiden Längsseiten 5 des Fahrgestelles 3 ist je ein mit einer Wirkfläche 26 ausgestattetes Auslöseteil 25 ortsfest angeordnet. Zumindest die Wirkfläche 26 eines jeden Auslöseteiles 25 befindet sich unterhalb der Unterseite 6 des Fahrgestelles 3. Die Auslöseteile 25 sind näher am vorderen Ende 2 des Transportwagens 1 angeordnet als die beiden Bremslöseeinrichtungen 20. Die Bremsvorrichtung 16 ist in bekannter Weise so eingestellt, dass diese auf die beiden Hinterräder 9 bremsend dann einwirkt, wenn sich der Transportwagen 1 in der Nichtgebrauchslage befindet und der Schiebegriff 15 der Schiebeeinrichtung 14 nicht betätigt wird. Nur beim Verschwenken der gelenkig mit den Bremsstangen 17 verbundenen Schiebeeinrichtung 14 oder des Schiebegriffes 15 lässt sich die Bremsvorrichtung 16 lösen und der Transportwagen 1 schieben oder ziehen.

Fig. 2 zeigt den unteren Teil einer Bremsstange 17 mit daran ortsfest angeordnetem gebogenen Bremsschuh 18, der zum Aufliegen oder Anpressen an ein Hinterrad 9 vorgesehen ist. Vom Bremsschuh 18 führt zuerst in Längsrichtung des Bremsschuhes 18, dann horizontal und in seitlicher Richtung die Bremslöseeinrichtung 20 weg, die aus einem winkligen Steg 21 mit daran angeordneter, um eine horizontale Achse drehbar gelagerter Gleitrolle 22 besteht.

In Fig. 3 ist ein Teil des Fahrgestelles 3 sowie ein daran angeordnetes Auslöseteil 25 eines in einen weiteren Wagen einzuschiebenden Transportwagens 1 sowie eine Bremslöseeinrichtung 20, ein Hinterrad 9 sowie ein Bremsschuh 18 mit teilweiser Bremsstange 17 eines vorausbefindlichen Transportwagens 1' dargestellt. Der rechts angedeutete Transportwagen 1 wird in den vorausbefindlichen Transportwagen 1' eingeschoben, somit platzsparend gestapelt, siehe auch horizontaler Pfeil. Die Zeichnung zeigt jenen Moment, in dem die noch hinten ansteigende Wirkfläche 26 des Auslöseteiles 25 an die Gleitrolle 22 der Bremslöseeinrichtung 20 anschlägt. Schiebt man den von rechts kommenden Transportwagen 1 in Pfeilrichtung weiter, drückt das Auslöseteil 25 mit seiner Wirkfläche 26 die Gleitrolle 22, und damit die Bremslöseeinrichtung 20 des vorausbefindlichen Transportwagens 1' nach oben, mit der Wirkung, dass der auf das Hinterrad 9 einwirkende, mit der Bremslöseeinrichtung 20 verbundene Bremsschuh 18 von der Lauffläche 12 des Hinterrades 9 abgehoben und somit die Bremswirkung aufgehoben wird, siehe vertikaler Pfeil. In der Praxis werden durch die beiden Auslöseteile 25 des einzuschiebenden Transportwagens 1 die Bremslöseeinrichtungen 20 des vorausbefindlichen Transportwagen 1' angehoben. Die Bremswirkung der Bremsvorrichtung 16 des Transportwagens 1' wird damit aufgehoben.

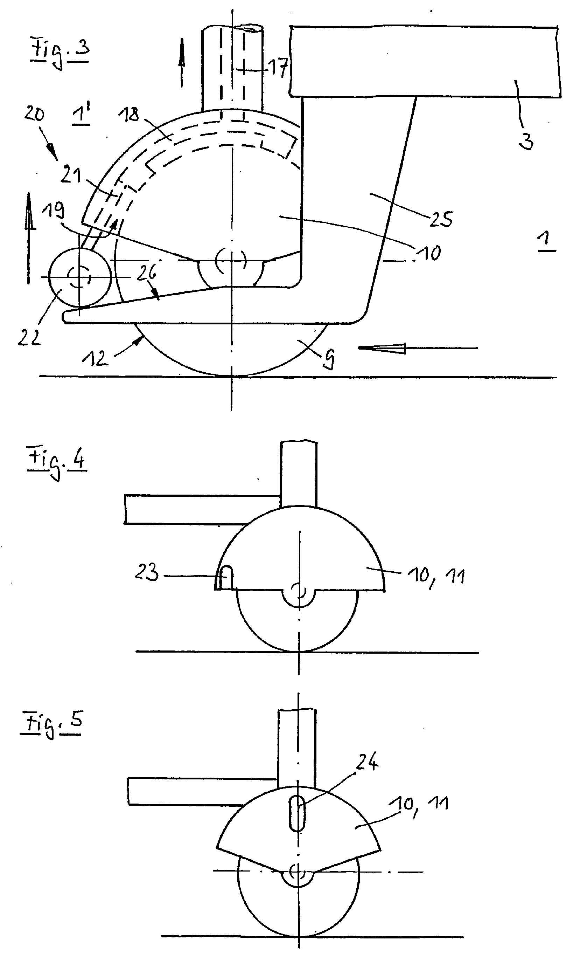

Während beim eben beschriebenen Ausführungsbeispiel der winklige Steg 21 einer jeden Bremslöseeinrichtung 20 den zwischen einer Radgabel 10 und dem zugehörenden Hinterrad 9 befindlichen Raum 19 nutzt, siehe Fig. 1 und 3, um von außen her zum Bremsschuh 18 zu gelangen, zeigt Fig. 4, dass es auch möglich ist, seitlich und von außen kommend den Steg 21 einer jeden Bremslöseeinrichtung 20 horizontal und direkt auf den Bremsschuh 18 zuzuführen. Im Beispiel ist deshalb an der Innenseite 11 einer jeden Radgabel 10 eine von unten nach oben führende Aussparung 23 vorgesehen, die zum Durchführen eines Steges 21 bestimmt ist.

Gemäß Fig. 5 ist es möglich, den Steg 21 einer jeden Bremslöseeinrichtung 20 mit der entsprechenden Bremsstange 17 lös- oder steckbar zu verbinden. Dazu ist es notwendig, an der Innenseite 11 einer jeden Radgabel 10 einen bevorzugt länglichen, in sich geschlossenen Durchbruch 24 vorzusehen, der vertikal angeordnet ist. Der Durchbruch 24 einer jeden Radgabel 10 ist zur Aufnahme des Steges 21 einer Bremslöseeinrichtung 20 vorgesehen. Auch hier, wie ebenso in den vorangegangenen Beispielen, führt jede Bremslöseeinrichtung 20 von außen her in die entsprechende Radgabel 10 zum Bremsschuh 18 oder zur Bremsstange 17. Das Anheben einer jeden Bremslöseeinrichtung 20 erfolgt in der gleichen Weise, wie in Fig. 3 beschrieben.

Es ist möglich, am Bremsschuh 18 einer jeden Bremslöseeinrichtung 20 wenigstens einen nach unten führenden Vorsprung vorzusehen, der ein vertikal angeordnetes Langloch aufweist, das von der Achse des Hinterrades 9 mit geringem Spiel durchdrungen wird. Durch diese Maßnahme lässt sich jede Bremslöseeinrichtung 20 zusätzlich an dieser Achse schiebebeweglich abstützen, was dann von Vorteil ist, wenn die Bremslöseeinrichtungen 20 bewegt werden.

## Patentansprüche

1. Von Hand bewegbarer, mit gleichen Wagen stapelbarer Transportwagen (1), mit einem Fahrgestell (3), mit einer Ladeplattform (7), mit zwei an der Rückseite (4) des Fahrgestelles (3) befindlichen, nach oben gerichteten Holmen (13), die eine Schiebeeinrichtung (14) tragen, wobei eine durch die Schiebeeinrichtung (14) beeinflussbare, bei Nichtgebrauch des Transportwagens (1) wirksame Bremsvorrichtung (16) vorgesehen ist, die zwei in den Holmen (13) befindliche Bremsstangen (17) aufweist, an deren unterem Ende jeweils ein auf ein Hinterrad (9) einwirkender Bremsschuh (18) angeordnet ist und wobei unterhalb des Fahrgestelles (3) und nahe eines jeden in einer Radgabel (10) geführten Hinterrades (9) je eine Bremslöseeinrichtung (20) vorgesehen und am Fahrgestell (3) jeweils ein mit einer Wirkfläche (26) ausgestattetes Auslöseteil (25) angeordnet sind und die Auslöseteile (25) beim Stapeln zweier Transportwagen mit Hilfe ihrer Wirkfläche (26) beim Auslenken der beiden Bremslöseeinrichtungen (20) des vorausbefindlichen Transportwagens (1') bestimmt sind, **dadurch gekennzeichnet, dass** jede Bremslöseeinrichtung (20) von außen her in eine Radgabel (10) führend mit einer Bremsstange (17) oder mit einem Bremsschuh (18) verbunden ist und dass sich die Wirkfläche (26) eines jeden Auslöseteiles (25) unterhalb der Unterseite (6) des Fahrgestelles (3) befindet.

2. Transportwagen nach Anspruch 1, **dadurch gekennzeichnet, dass** jede Bremslöseeinrichtung (20) eine Gleitrolle (22) aufweist.

3. Transportwagen nach Anspruch 1, **dadurch gekennzeichnet, dass** die Auslöseteile (25) näher am vorderen Ende (2) des Transportwagens (1) angeordnet sind als die beiden Bremslöseeinrichtungen (20).

4. Transportwagen nach einem der Ansprüche 1 bis 3, **dadurch gekennzeichnet, dass** beim Ineinanderschieben zweier Transportwagen (1, 1') die Wirkflächen (26) der Auslöseteile (25) des einzuschiebenden Transportwagens (1) die Bremslöseeinrichtungen (20) des vorausbefindlichen Transportwagens (1') anheben.

5. Transportwagen nach einem der Ansprüche 1 bis 4, **dadurch gekennzeichnet, dass** jede Bremslöseeinrichtung (20) einen Steg (21) aufweist und jeder Steg (21) durch den zwischen einer Radgabel (10) und dem dazugehörigen Hinterrad (9) gebildeten Raum (19) zu einem Bremsschuh (18) geführt ist.

6. Transportwagen nach einem der Ansprüche 1 bis 4, **dadurch gekennzeichnet, dass** an der Innenseite (11) einer jeden Radgabel (10) eine Aussparung (23) oder ein Durchbruch (24) vorgesehen ist, durch die oder den ein Steg (21) der entsprechenden Bremslöseeinrichtung (20) zum Bremsschuh (18) oder zur Bremsstange (17) geführt ist.

7. Transportwagen nach einem der Ansprüche 1 bis 6, **dadurch gekennzeichnet, dass** jede Bremslöseeinrichtung (20) zusätzlich an der Achse eines Hinterrades (9) schiebebeweglich abgestützt ist.

## Claims

1. A manually movable trolley (1) which is nestable with like trolleys, comprising a wheel frame (3), a loading platform (7) and two upwardly extending uprights (13) located at the rear (4) of the wheel frame (3) and carrying a pushing arrangement (14), wherein a brake device (16) is provided which is controllable by the pushing arrangement (14) and effective when the trolley (1) is not in use and which has two brake rods (17) arranged in the uprights (13), a brake shoe (18), acting on a rear wheel (9), being provided at the lower end of each brake rod, and wherein a brake release device (20) is provided underneath the wheel frame (3) close to each rear wheel (9), guided in a wheel fork (10), and release parts (25) each provided with an active surface (26) are arranged on the wheel frame (3) and are intended to deflect the two brake release devices (20) of the preceding trolley (1') by means of their active surface (26) when two trolleys are nested, **characterised in that** each brake release device (20), extending into a wheel fork (10) from outside, is connected to a brake rod (17) or a brake shoe (18), and **in that** the active surface (26) of each release part (25) is located below the underside (6) of the wheel frame (3).

2. A trolley according to claim 1, **characterised in that** each brake release device (20) has a roller (22).

3. A trolley according to claim 1, **characterised in that** the release parts (25) are arranged nearer to the front end (2) of the trolley (1) than the two brake release devices (20).

4. A trolley according to any one of claims 1 to 3, **characterised in that**, when two trolleys (1, 1') are nested, the active surfaces (26) of the release parts (25) of the trolley (1) to be pushed in raise the brake release devices (20) of the preceding trolley (1').

5. A trolley according to any one of claims 1 to 4, **characterised in that** each brake release device (20) has a crosspiece (21), and each crosspiece (21) is guided through the gap (19), formed between a wheel fork (10) and the associated rear wheel (9), to a brake shoe (18).

6. A trolley according to any one of claims 1 to 4, **characterised in that** on the inside (11) of each wheel fork (10) is provided a recess (23) or an opening (24) through which a crosspiece (21) of the corresponding brake release device (20) extends to the brake shoe (18) or the brake rod (17).

7. A trolley according to any one of claims 1 to 6, **characterised in that** each brake release device (20) is additionally displaceably supported on the axle of a rear wheel (9).

## Revendications

1. Chariot de transport (1) déplaçable manuellement, emboîtable avec des chariots identiques, comportant un châssis (3), une plate-forme de chargement (7), deux montants (13) orientés vers le haut, se trouvant sur la face arrière (4) du châssis (3) et qui portent un dispositif de poussée (14), un dispositif de freinage (16) pouvant être influencé par le dispositif de poussée (14), actif lors de la non-utilisation du chariot de transport (1) étant prévu, qui présente deux tiges de frein (17) se trouvant dans les montants (13) et à l'extrémité inférieure desquelles est chaque fois disposé un sabot de frein (18) agissant sur une roue arrière (9) et, au-dessous du châssis (3) et à proximité de chaque roue arrière (9) guidée dans une fourche de roue (10) étant chaque fois prévu un dispositif de desserrage de frein (20) et sur le châssis (3) étant chaque fois disposée une pièce de déclenchement (25) équipée d'une surface active (26) et les pièces de déclenchement (25) étant destinées, à l'aide de leur surface active (26), lors de l'emboîtement des deux chariots de transport, à la déviation des deux dispositifs de desserrage de frein (20) du chariot de transport (1') se trouvant devant, **caractérisé en ce que** chaque dispositif de desserrage de frein (20) est relié à partir de l'extérieur à travers une fourche de roue (10) à une tige de frein (17) ou à un sabot de frein (18) et **en ce que** la surface active (26) de chaque pièce de déclenchement (25) se trouve au-dessous de la face inférieure (6) du châssis (3).

2. Chariot de transport selon la revendication 1, **caractérisé en ce que** chaque dispositif de desserrage de frein (20) présente un galet (22).

3. Chariot de transport selon la revendication 1, **caractérisé en ce que** les pièces de déclenchement (25) sont disposées plus près de l'extrémité avant (2) du chariot de transport (1) que les deux dispositifs de desserrage de frein (20).

4. Chariot de transport selon l'une des revendications 1 à 3, **caractérisé en ce que**, lors de l'emboîtement de deux chariots (1, 1') l'un dans l'autre, les surfaces actives (26) des pièces de déclenchement (25) du chariot de transport à emboîter (1) soulèvent les dispositifs de desserrage de frein (20) du chariot de transport (1') se trouvant devant.

5. Chariot de transport selon l'une des revendications 1 à 4, **caractérisé en ce que** chaque dispositif de desserrage de frein (20) présente une entretoise (21) et chaque entretoise (21) est guidée vers un sabot de frein (18) à travers l'espace (19) formé entre une fourche de roue (10) et la roue arrière (9) correspondante.

6. Chariot de transport selon l'une des revendications 1 à 4, **caractérisé en ce qu'**il est prévu, sur la face intérieure (11) de chaque fourche de roue (10), un évidement (23) ou un passage (24) par lequel une entretoise (21) du dispositif de desserrage de frein (20) correspondant est guidée vers le sabot de frein (18) ou la tige de frein (17).

7. Chariot de transport selon l'une des revendications 1 à 6, **caractérisé en ce que** chaque dispositif de desserrage de frein (20) prend en supplément appui de manière mobile par coulissement sur l'axe d'une roue arrière (9).
